# EUROPEAN PATENT APPLICATION

(11) **EP 1 170 155 A2**
(43) Date of publication of application: **09.01.2002**
(21) Application number: 01305628.8
(22) Date of filing: 28.06.2001
(51) Int. Cl.: B60D 1/36, B60Q 1/52, G01S 11/16

(54) **Method and means for facilitating reversing of a towing vehicle**

(30) Priority: 30.06.2000 GB 0015962; 17.04.2001 GB 0109392
(71) Applicant: Flotec UK Limited, Stoke Canon, Exeter EX5 4RJ (GB)
(72) Inventor: Carrington, Andrew, Stoke Canon, Exeter, EX5 4RJ (GB); Rydin-Orwin, Philip, Stoke Canon, Exeter, EX5 4RJ (GB); Orwin, Bernard, Stoke Canon, Exeter, EX5 4RJ (GB)
(74) Representative: Brown, Michael Stanley

(57) **Abstract**

Reversing of a towing vehicle into a position in which a hitch component at the rear of the towing vehicle (11) can be engaged with a hitch component at the front of a trailer vehicle (13) is facilitated by providing:-
a) a master unit (10) mounted on the rear of the towing vehicle (11), the master unit (10) including computing means, a radio frequency transmitter (15) and a pair of laterally spaced ultrasonic receivers (19 and 20),
b) a first slave unit (12) mounted on the front of the trailer vehicle (13), the first slave unit (12) including a radio frequency receiver (16) and an ultrasonic transmitter (18), and
c) a second slave unit (14) mounted within the vehicle (11), the second slave unit (14) including a radio frequency receiver (17) and a display (28) and/or an audible indicator.

## Description

### Field of the Invention

This invention relates to a method and means for facilitating reversing of a towing vehicle into a position in which a hitch component at the rear of the towing vehicle can be engaged with a hitch component at the front of a trailer vehicle.

In US Patent Specification No. 5,191,328 there is described a trailer hitching aid which comprises a dual transmitter mounted on the forward end of the trailer vehicle and arranged to transmit pulses of infra red light and pulses of ultrasonic sound. An infra red detector and a pair of laterally spaced ultrasonic sound detectors are mounted on the rear of the towing vehicle. The detectors are incorporated in an electrical circuit which includes a computer programmed so that a measurement can be made of the time difference between the detection of the light burst and the detection of the sound bursts. The time differences are utilised to calculate the distance from each detector to the transmitter, and the distances and angles between the detectors and the transmitter are then displayed on the computer screen to enable the driver of the towing vehicle to manouevre it accurately into a position in which the hitch components on the towing vehicle and the trailer vehicle are in register.

It is an object of the present invention to provide an improved method and means for facilitating reversing of a towing vehicle into a position in which a hitch component at the rear of the towing vehicle can be engaged with a hitch component at the front of a trailer vehicle.

It is a more specific object of the present invention to provide improvements over the arrangement described in US Patent Specification No. 5,191,328.

### Summary of the Invention

According to a first aspect of the present invention there is provided a method of facilitating reversing of a towing vehicle into a position in which a hitch component at the rear of the towing vehicle can be engaged with a hitch component at the front of a trailer vehicle, said method comprising providing:-
a) a master unit which includes computing means, a radio frequency transmitter and a pair of laterally spaced ultrasonic receivers,
b) a first slave unit which includes a radio frequency receiver and an ultrasonic transmitter, and
c) a second slave unit which includes a radio frequency receiver and a display and/or an audible indicator,
   mounting the master unit on the rear of the towing vehicle,
   mounting the first slave unit on the front of the trailer vehicle,
   mounting the second slave unit within the towing vehicle at a position such that it is readily visible and/or audible by the driver of the towing vehicle, and
   creating a sequence of operations such that the radio frequency transmitter of the master unit sends a signal to the radio frequency receiver of the first slave unit to initiate operation of the ultrasonic transmitter of the first slave unit to send signals to the ultrasonic receivers such that the computing means calculates the distances between the ultrasonic transmitter and the ultrasonic receivers and the radio frequency transmitter of the master unit sends signals to the second slave unit to effect operation of the display and/or the audible indicator.

According to a second aspect of the present invention there is provided means for facilitating reversing of a towing vehicle into a position in which a hitch component at the rear of the towing vehicle can be engaged with a hitch component at the front of a trailer vehicle, said facilitating means including:-
a) a master unit which includes computing means, a radio frequency transmitter and a pair of laterally spaced ultrasonic receivers,
b) a first slave unit which includes a radio frequency receiver and an ultrasonic transmitter, and
c) a second slave unit which includes a radio frequency receiver and a display and/or an audible indicator,
   the master unit being mounted on the rear of the towing vehicle,
   the first slave unit being mounted on the front of the trailer vehicle,
   and the second slave unit being mounted within the towing vehicle at a position such that it is readily visible and/or audible by the driver of the towing vehicle,
   means being provided for creating a sequence of operations such that the radio frequency transmitter of the master unit sends a signal to the radio frequency receiver of the first slave unit to initiate operation of the ultrasonic transmitter of the first slave unit to send signals to the ultrasonic receivers such that the computing means calculates the distances between the ultrasonic transmitter and the ultrasonic receivers and the radio frequency transmitter of the master unit sends signals to the second slave unit to effect operation of the display and/or the audible indicator.

The ultrasonic receivers of the master unit are preferably ultrasonic transceivers, i.e. they can both transmit and receive ultrasonic waves, so that the facilitating means can also be used as a reversing aid.

The radio frequency signals transmitted by the radio frequency transmitter of the master unit are preferably coded signals and each slave unit preferably includes a decoder to enable it to recognise the signals to which it is required to respond.

### Brief Description of the Drawings

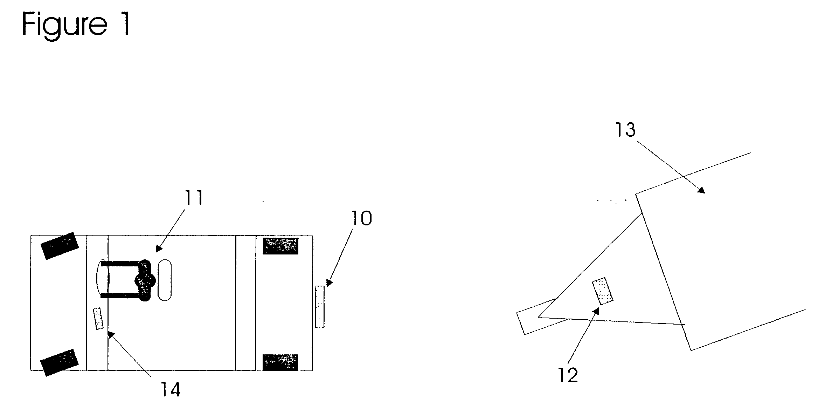

Figure 1 is a plan view of a vehicle and trailer fitted with the facilitating means,
Figures 2 and 3 show different relative positions of the vehicle and trailer, and

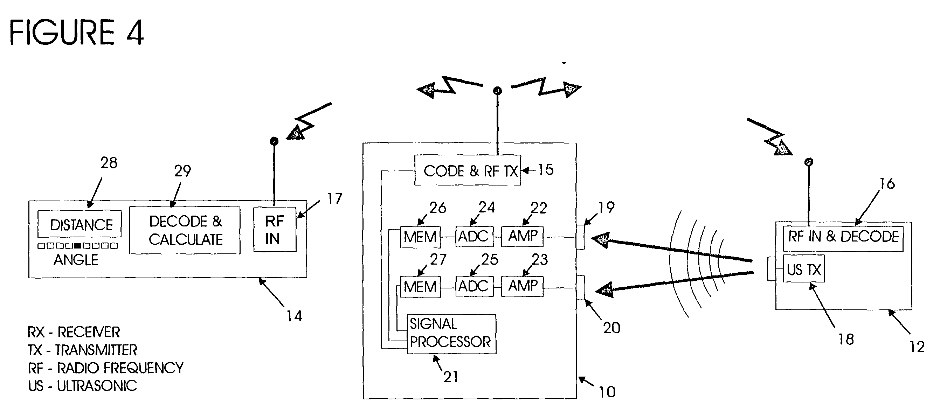

Figure 4 is a system block diagram.

### Description of the Preferred Embodiment

As shown in the drawings, the facilitating means comprises a master unit 10 which, in use, is mounted on the rear of the towing vehicle 11, a first slave unit 12 which, in use, is mounted on the front of the trailer 13 and a second slave unit 14 which, in use, is mounted within the towing vehicle 11 adjacent the rear view mirror thereof so that it is readily visible and audible to the driver of the towing vehicle 10.

The master unit 10 includes a radio frequency transmitter 15 which, in use, transmits coded signals to a radio frequency receiver 16 contained within the first slave unit 12 and to a radio frequency receiver 17 contained within the second slave unit 14. Each receiver 16, 17 has an associated decoder so as to enable them to recognise and respond appropriately to the signals which they receive. The first slave unit 12 includes an ultra sonic transmitter 18 which is connected to the receiver 16 such that, on receipt of an initiation signal by the receiver 16 from the transmitter 15, a signal is sent to the ultra sonic transmitter 18 to cause it to transmit a burst of ultra sonic energy.

The master unit 10 includes two laterally spaced ultra sonic transceivers 19, 20 and a timer comprising a timing circuit which includes a signal processor 21, a pair of amplifiers 22 and 23, a pair of analog to digital converters 24 and 25, and a pair of memory units 26 and 27. Thus, when a radio frequency signal is transmitted from the master unit 10 and received by the first slave unit 12, an ultra sonic signal is transmitted by the first slave unit 12 to the two transceivers 19 and 20 of the master unit 10. The timer is started on transmission of the signal from the master unit 10 to the first slave unit 12. The master unit 10 also includes a temperature sensor which sends information to the signal processor 21 concerning the ambient temperature.

Because radio frequency energy travels in air approximately one million times faster than ultra sonic energy and the radio frequency signal code and decode times are small, the radio frequency link can be considered as operating instantaneously. When the ultra sonic transceivers 19 and 20 detect the ultra sonic burst, the timer is stopped and the time interval between transmission of the radio frequency signal and reception of the ultra sonic burst can be considered to be equal to the elapsed time interval for the ultra sonic burst to travel from the first slave unit 12 to the master unit 10.

The distance is then calculated by multiplying the time interval by the velocity of sound in air. The velocity of sound in air is determined by measuring the temperature and then using a known mathematical relationship between ambient temperature and the speed of sound in air. The method of the present invention thus includes measuring the ambient temperature and then effecting a calibration operation in dependence on the measured temperature.

As mentioned above, the master unit 10 includes two ultra sonic transceivers 19 and 20, i.e. sensors that can act as a transmitter and a receiver. This enables the master unit 10 to act without the first slave unit 12 as a standard reversing aid by transmitting and receiving ultra sonic energy and determining the elapsed time between transmission and subsequent reception of a burst of ultra sonic energy reflected by an adjacent object.

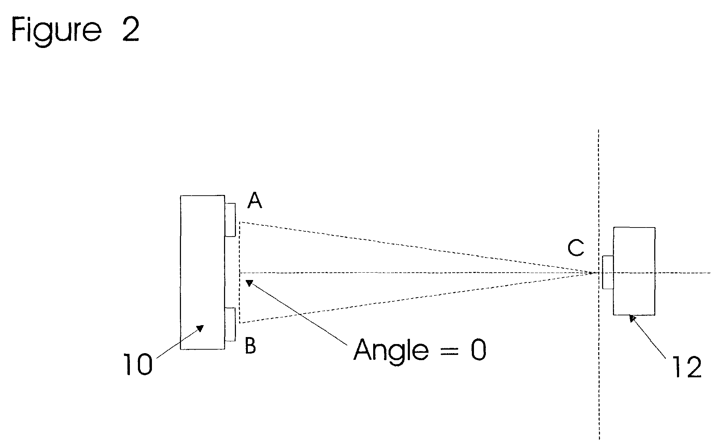

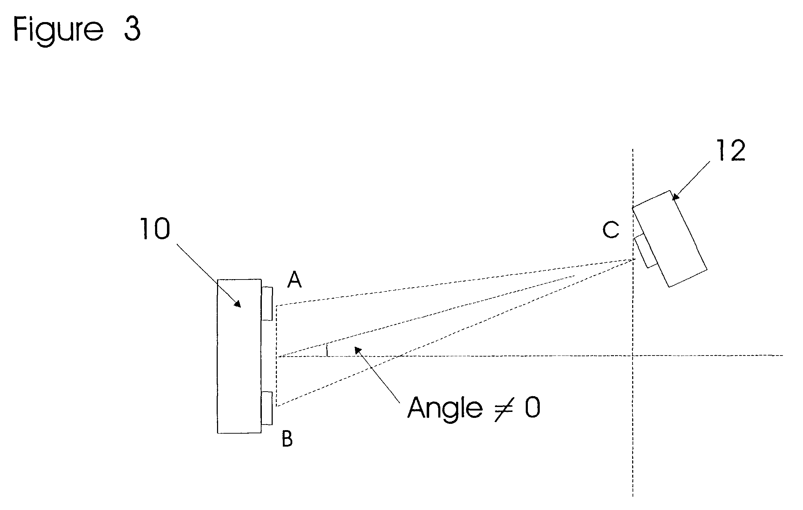

By having the two spaced transceivers 19 and 20 positioned a known distance apart, it is possible to derive the angular position of the trailer relative to the vehicle, as shown in Figures 2 and 3. With the relative positions of the vehicle and trailer as shown in Figure 2, i.e. with the towing vehicle accurately aligned with the trailer, the time for the burst of ultra sonic energy to travel from C to A will be the same as that taken to travel from C to B. On the other hand, with the relative positions of the vehicle and trailer as shown in Figure 3, i.e. with the towing vehicle out of alignment with the trailer, the time for the burst of ultra sonic energy to travel from C to A will be significantly less than that taken by the burst of ultra sonic energy to travel from C to B.

The master unit may alternatively include more than two transceivers. For example, an additional transceiver may be provided which is at a different height as compared to the two transceivers 19 and 20 shown in the drawings.

The signal processor 21 of the master unit receives information concerning the times taken by the burst of ultra sonic energy to travel from C to A and from C to B and, utilising the information concerning the velocity of ultra sonic energy at the relevant temperature, calculates the distances from C to A and from C to B. This information is then encoded and transmitted by the radio frequency transmitter 15.

The ultrasonic transmission involves converting an electrical pulse train to an ultrasonic pulse train in the ultrasonic transmit sensor 18. The ultrasonic pulse train then propagates from the transmitter 18 of the first slave unit 12 to the two ultrasonic transceivers 19 and 20 of the master unit 10 travelling at the speed of sound in air. At the time of reception, the two transceivers 19 and 20 convert the ultrasonic signals back to electrical signals and the electrical signals then proceed via amplifiers 22 and 23 to analogue to digital converters 24 and 25. Each of the converters 24 and 25 then stores a digital replica of the analogue signal in the associated memory 26, 27 for subsequent statistical processing.

The master unit 10 will then process the data using advanced statistical methods. It will first conduct a statistical "quality" test on the data to make sure that it is valid and then calculates the two transit times, i.e. from C to A, and from C to B.

Alternatively the master unit can include two receiving sensors and one channel that can switch between the two sensors. A measurement then consists of two transmissions, in quick succession, with the receiving channel connected first to one receiving sensor and then to the other.

The second slave unit 14 includes a display portion 28 which includes a facility for displaying information as to:-
a) the distance between the rear of the towing vehicle 10 and the front of the trailer 12, and
b) the angular relationship of the direction of travel of the towing vehicle 10 to a straight line joining the tow ball at the rear of the towing vehicle 10 and the coupling on the tow bar of the trailer 12.

Operation of the display portion 28 is controlled by a "decode and calculate" module 29 contained within the second slave unit 14 and interposed between the radio frequency receiver 17 and the display portion 28.

The second slave unit 14 may additionally or alternatively include an audible indicator which transmits the information referred to above audibly to the driver, for example, by means of a speech unit which is programmed to give the information to the driver in response to the signals which it receives.

The accuracy of the system is such that, when the reversing procedure is complete, the driver need only lower the trailer coupling directly onto the vehicle tow ball.

The use of radio frequency transmissions has the important advantage that it is not necessary to interconnect the master unit and the two slave units by means of wires, thereby simplifying installation of the units in a vehicle.

## Claims

1. A method of facilitating reversing of a towing vehicle into a position in which a hitch component at the rear of the towing vehicle can be engaged with a hitch component at the front of a trailer vehicle, said method comprising providing:-
a) a master unit which includes computing means, a radio frequency transmitter and a pair of laterally spaced ultrasonic receivers,
b) a first slave unit which includes a radio frequency receiver and an ultrasonic transmitter, and
c) a second slave unit which includes a radio frequency receiver and a display and/or an audible indicator,
mounting the master unit on the rear of the towing vehicle,
mounting the first slave unit on the front of the trailer vehicle,
mounting the second slave unit within the towing vehicle at a position such that it is readily visible and/or audible by the driver of the towing vehicle, and
creating a sequence of operations such that the radio frequency transmitter of the master unit sends a signal to the radio frequency receiver of the first slave unit to initiate operation of the ultrasonic transmitter of the first slave unit to send signals to the ultrasonic receivers such that the computing means calculates the distances between the ultrasonic transmitter and the ultrasonic receivers and the radio frequency transmitter of the master unit sends signals to the second slave unit to effect operation of the display and/or the audible indicator.

2. A method of facilitating reversing of a towing vehicle as claimed in Claim 1, which includes measuring the ambient temperature and effecting a calibration operation in dependence on the measured temperature.

3. Means for facilitating reversing of a towing vehicle into a position in which a hitch component at the rear of the towing vehicle can be engaged with a hitch component at the front of a trailer vehicle, said facilitating means including:-
a) a master unit which includes computing means, a radio frequency transmitter and a pair of laterally spaced ultrasonic receivers,
b) a first slave unit which includes a radio frequency receiver and an ultrasonic transmitter, and
c) a second slave unit which includes a radio frequency receiver and a display and/or audible indicator,
the master unit being mounted on the rear of the towing vehicle,
the first slave unit being mounted on the front of the trailer vehicle,
and the second slave unit being mounted within the towing vehicle at a position such that it is readily visible and/or audible by the driver of the towing vehicle,
means being provided for creating a sequence of operations such that the radio frequency transmitter of the master unit sends a signal to the radio frequency receiver of the first slave unit to initiate operation of the ultrasonic transmitter of the first slave unit to send signals to the ultrasonic receivers such that the computing means calculates the distances between the ultrasonic transmitter and the ultrasonic receivers and the radio frequency transmitter of the master unit sends signals to the second slave unit to effect operation of the display and/or the audible indicator.

4. Facilitating means as claimed in Claim 3, in which the ultrasonic receivers of the master unit are ultrasonic transceivers, i.e. they can both transmit and receive ultrasonic waves, so that the facilitating means can also be used as a reversing aid.

5. Facilitating means as claimed in Claim 3 or Claim 4, in which the radio frequency signals transmitted by the radio frequency transmitter of the master unit are coded signals and each slave unit includes a decoder to enable it to recognise the signals to which it is required to respond.

6. Facilitating means as claimed in any one of Claims 3 to 5, which includes means for measuring the ambient temperature and effecting a calibration operation in dependence on the measured temperature.
